# EUROPÄISCHE PATENTSCHRIFT

(11) **EP 3 667 410 B1**
(45) Veröffentlichungstag und Bekanntmachung des Hinweises auf die Patenterteilung: **07.09.2022**
(21) Anmeldenummer: 18211649.1
(22) Anmeldetag: 11.12.2018
(51) Int. Cl.: G03B 17/00, B60R 1/00, B60R 11/00

(54) **KRAFTFAHRZEUG-SENSORIKKOMBINATIONSMODUL**
MOTOR VEHICLE SENSOR SYSTEM COMBINATION MODULE
MODULE DE SYSTÈME DE DÉTECTION COMBINÉ DE VÉHICULE AUTOMOBILE

(43) Veröffentlichungstag der Anmeldung: 17.06.2020
(73) Patentinhaber: ZKW Group GmbH, 3250 Wieselburg (AT)
(72) Erfinder: Schadenhofer, Peter, 3382 Roggendorf (AT); Hartmann, Peter, 3392 Schönbühel-Aggsbach (AT); Baker, Julian, 3240 Mank (AT); Gürtl, Josef, 3233 Kilb (AT); Hacker, Alexander, 3150 Wilhelmsburg (AT); Artmann, Matthäus, 3370 Ybbs an der Donau (AT); Brunner, Michael, 3650 Pöggstall (AT); Reisinger, Bettina, 3300 Amstetten (AT); Altmann, Johann, 3950 Gmünd (AT); Jackl, Christian, 3250 Wieselburg (AT)
(74) Vertreter: Patentanwaltskanzlei Matschnig & Forsthuber OG

(56) Entgegenhaltungen:
- EP-A1- 1 457 384
- CN-B- 103 754 161
- CN-U- 207 301 793
- CN-U- 207 360 222
- DE-A1-102011 080 556
- KR-A- 20070 050 181

## Beschreibung

Die Erfindung betrifft ein Kraftfahrzeug-Sensorikkombinationsmodul, welches insbesondere bei vollständig oder teilweise autonom betriebenen Kraftfahrzeugen zum Einsatz kommt. Die Erfindung betrifft ferner ein Kraftfahrzeug, insbesondere ein autonom fahrendes Kraftfahrzeug, umfassend ein Sensorikombinationsmodul gemäß der Erfindung.

Technische Einrichtungen wie Sensorsysteme, die zum zuverlässigen Erkennen einer momentanen Umfeldsituation eines Kraftfahrzeugs vorgesehen sind, stellen eine besondere Herausforderung dar, wenn Fahrzeuge nicht mehr von einem Menschen gelenkt werden, sondern vollständig autonom oder teilweise autonom, z.B. über einen autonomen und den Fahrer entlastenden Selbstfahrmodus, agieren. Derartige Sensorsysteme werden aufgrund der fortschreitenden technologischen Entwicklung auf dem Gebiet des autonomen Fahrens zunehmend an Bedeutung gewinnen. Sie sollen wünschenswerter Weise eine vorliegende Umfeldsituation zuverlässig erkennen und bewerten, so dass auf Grundlage der erfassten Situation, insbesondere einer Gefahrensituation, entsprechende Maßnahmen wie Ausweichen, Abbremsen oder die Übermittlung entsprechender Kommunikationssignale an andere Verkehrsteilnehmer wie Fußgänger, Radfahrer und nicht-autonome Fahrzeuge ergriffen werden können.

Sensorsysteme für autonom fahrende Kraftfahrzeuge, sind grundsätzlich bekannt. Bei den derzeit entwickelten autonom fahrenden Fahrzeugprototypen werden Sensoren rund um den Außenbereich des Kraftfahrzeugs, aber auch am Dach platziert. Die Sensorik in der Außengeometrie des Kraftfahrzeugs, speziell im Frontbereich des Kraftfahrzeugs, wird entscheidend für die Umsetzung autonom fahrender Kraftfahrzeuge in Serie.

Es ist eine Aufgabe der Erfindung ein Sensorsystem für vollständig autonom oder teilweise autonom betriebene Kraftfahrzeuge bereitzustellen, welches möglichst kompakt am Außenbereich des Kraftfahrzeugs montiert, insbesondere in die Kraftfahrzeugfront integriert, werden kann. Ferner soll das Sensorsystem für einen außen stehenden Betrachter nicht in störender Weise sichtbar sein, um den hohen Designansprüchen der Kunden an das äußere Erscheinungsbild des Kraftfahrzeugs zu genügen. Eine weitere große Herausforderung, die es zu lösen gilt und somit eine weitere Aufgabe der Erfindung darstellt, ist ein optimaler Schutz des Sensorsystems vor äußeren Einflüssen wie Verschmutzung, Witterung etc., um die Lebensdauer des Sensorsystems maximal auszureizen.

Diese Aufgaben werden durch ein Kraftfahrzeug-Sensorikkombinationsmodul gemäß den Merkmalen des Anspruchs 1 gelöst.

Dank der Erfindung ist es möglich, verschiedene Sensormittel zum Erfassen von Fahrzeugumfelddaten in einem zentralen Sensorikkombinationsmodul zu kombinieren, welches als geschlossen montierte, in sich eingestellte Einheit im Außenbereich des Kraftfahrzeugs justiert und fixiert werden kann. Mit Vorteil wird das das Sensorikkombinationsmodul in der Kraftfahrzeugfront integriert, vorzugsweise in einer Art und Weise, dass sich dieses wenig bis gar nicht störend auf die Ästhetik des Kraftfahrzeugs auswirkt, um den hohen Designansprüchen von Käufern zu entsprechen.

Innerhalb der Sensorikbaugruppe sind die einzelnen Sensorikmittel mittels Einstellmechaniken bereits statisch zueinander eingestellt und unveränderlich zueinander justiert, so dass die Sensorikbaugruppe des Sensorikkombinationsmoduls als eine fix und fertig justierte Einheit betrachtet werden kann und nur mittels der Einstellmittel eine statische und/oder dynamische Anpassung erfolgt. Für die statische und/oder dynamische Anpassung/Einstellung der Sensorikbaugruppe sind die Einstellmittel steuerbar ausgeführt und hierfür zweckmäßigerweise mit der Steuerungs- und Auswerteeinrichtung des Kraftfahrzeugs verbunden. Die Montage der einzelnen Komponenten der Sensorikbaugruppe wird dabei so stabil ausgeführt, dass es zu keinen Fehlstellungen der Umfeldsensorikmittel bzw. der Sensormittel innerhalb der Sensorikbaugruppe während des Fahrbetriebs, günstigerweise über die gesamte Kraftfahrzeuglebensdauer, kommt. Die Umfeldsensorikmittel werden z.B. durch eine Dreipunktverstellung mittels Einstellschrauben, statisch auf der Sensorhalterung befestigt und auf eine Weise justiert, dass der Sichtbereich und die Reichweite der Sensoren gewährleistet werden kann.

Ein weiterer Vorteil der Erfindung liegt darin, dass alle Sensormittel das gleiche Bezugssystem haben, indem sie vertikal und horizontal fix zueinander justiert sind, weshalb eine gemeinsame Kalibrierung ermöglicht wird.

Der Ausdruck "an einem Außenbereich des Kraftfahrzeugs montierbar" umfasst jegliche Möglichkeit der Befestigung des Sensorikombinationsmodul in oder am Außenbereich des Kraftfahrzeugs, beispielsweise eine Montage an der Außengeometrie oder ein Einbau des Sensorikkombinationsmoduls im Außenbereich ähnlich einem Kraftfahrzeugscheinwerfer. Vorzugsweise wird das Sensorikkombinationsmodul an einem Bereich der Kraftfahrzeugvorderfront montiert, am meisten bevorzugt in einen Bereich der Kraftfahrzeugvorderfront, z.B. mittig im Bereich des Kühlergrills, integriert.

Bei der Montage bzw. beim Einbau des Sensorikkombinationsmoduls am Außerbereich des Kraftfahrzeugs, z.B. bei der Integration in die Fahrzeugvorderfront, wird die Sensorikbaugruppe mittels der Einstellmittel in eine Grundeinstellung gebracht. Im laufenden Betrieb erfolgt eine statische und/oder dynamische Einstellung bzw. Anpassung der Sensorikbaugruppe, um den Sichtbereich der Umfeldsensorikmittel in der Sensorikbaugruppe an unterschiedliche dynamische (z.B. Straßenunebenheiten, Bremsen, Beschleunigen etc) und/oder statische (z.B. Beladungszustände des Fahrzeugs) Einflüsse anpassen und diese kompensieren zu können. Dies hat den Vorteil, dass durch die statische und dynamische Kompensation der vertikalen Position der Sensorikbaugruppe stets eine optimale Sicht gegeben ist. Der Sichtbereich der Umfeldsensorikmittel kann auf diese Weise auch reduziert werden, um eine bessere Auflösung oder eine bessere Empfindlichkeit (größere Reichweite) zu erreichen.

Die Einstellmittel zur statischen und/oder dynamischen Einstellung der Sensorikbaugruppe können eine oder mehrere mechanische oder elektromechanische Verstelleinrichtungen umfassen. Für die dynamische Einstellung kommen vorzugsweise elektromechanische Verstelleinrichtungen, insbesondere ein Elektromotor, zum Einsatz. Die Einstellgenauigkeit der Verstelleinrichtungen liegt vorzugsweise bei +/- 0,1°, vertikal und horizontal, liegt. Der Gesamtverstellbereich eines Elektromotors kann z.B. bei 6° liegen.

Das Kraftfahrzeug-Sensorikkombinationsmodul, hierin kurz als Sensorikkombinationsmodul bezeichnet, umfasst Umfeldsensorikmittel mit zumindest zwei Sensormittel zum Erfassen von Fahrzeugumfelddaten, wobei die Steuerungs- und Auswerteeinrichtung des Kraftfahrzeugs, an welche die Sensoreinheit anschließbar ist, dazu eingerichtet ist, die Fahrzeugumfelddaten zu empfangen, auszuwerten und in der Steuerung des Kraftfahrzeugs zu berücksichtigen. Darüber hinaus können die von den Umfeldsensorikmitteln erfassten Daten an ein separates Steuergerät innerhalb des Sensorikkombinatonsmoduls geleitet, dort fusioniert und auf Plausibilität geprüft werden und anschließend gefiltert an die Steuerungs- und Auswerteeinrichtung des Kraftfahrzeugs geleitet werden.

Da es sich bei dem erfindungsgemäßen Sensorikkombinationsmodul um eine sehr kompakte Baukomponente handelt, ist ein Einsatz in verschiedenen Fahrzeugmodellen auf einfache Art und Weise realisierbar. Das Sensorikkombinationsmodul kann auch bei der Kraftfahrzeugentwicklung, beispielsweise bei Crashsimulationen, beim Fußgängerschutz und dergleichen, als eine Einheit betrachtet werden.

Erfindungsgemäß umfassen die Umfeldsensorikmittel zumindest zwei Sensormittel zum Erfassen von Fahrzeugumfelddaten, wobei die zumindest zwei Sensormittel auf der Sensorhalterung statisch zueinander justiert sind. Wie oben erwähnt erfolgt dies beispielsweise durch eine Dreipunktverstellung mittels Einstellschrauben.

Die Umfeldsensorikmittel können dabei jegliche dem Fachmann auf dem Gebiet der Umfeldsensorik bekannten Sensormittel umfassen. Inbesondere umfassen die Umfeldsensorikmittel dabei zumindest eines der folgenden Sensormittel: optische Sensormittel, Ultraschallsensormittel, Radarsensormittel, LiDAR-Sensormittel, Infrarotsensormittel. Derartige Sensormittel sind dem einschlägigen Fachmann hinlänglich bekannt.

Die optischen Sensormittel umfassen vorzugsweise zumindest ein Kamerasystem mit zumindest einer Kamera wie zum Beispiel bildsensorgestützte Front- und Umfeldkameras. Zweckmäßigerweise ist die zumindest eine Kamera des Kamerasystems so angeordnet, dass das Kamerasystem Bilder und/oder Videos im Gesichtsfeld des Fahrers aufnehmen kann. Die Kamera kann die Funktionen einer normalen Kamera, einer Nachtsicht-Kamera und/oder einer Wärmebildkamera, die, basierend auf Nutzung von beispielsweise Langwellen-IR im Bereich von 8-12µm (nach N.Pichon et.al. "All-weather vision for automotive safety: which spectral band?" in VISION 2016 proceedings) zuverlässig Fußgängererkennung bei Nacht und Nebel Bedingungen erlaubt und daher als "Nebelsichtkamera" genutzt werden kann, umfassen, so dass bei allen Lichtverhältnissen und Witterungen eine zuverlässige und qualitativ ausreichende Erfassung der Fahrzeugumgebung und darin befindlicher Objekte bzw. anderer Verkehrsteilnehmer möglich ist.

Die im Erfassungsbereich der jeweiligen Umfeldsensorikmittel generierten Umfelddaten werden wie oben erwähnt an die Steuerungs- und Auswerteeinrichtung des Kraftfahrzeugs zur Auswertung weitergeleitet. Die Umfeldsensorikmittel können auch in Kombination miteinander eingesetzt werden, um die verschiedenen Vorteile zu nutzen, z.B. eine Kombination der Daten aus einer Kamera und einem Infrarotsensormittel, und um Menschen und Tiere auf Grundlage ihrer Körperwärme noch besser erfassen zu können.

Bei bestimmten Varianten umfasst das Sensorikkombinationsmodul zumindest eine Beleuchtungseinheit. Die Beleuchtungseinheit dient zur Unterstützung der Sensormittel (z.B. Ausleuchten der Fahrzeugumgebung oder gezieltes Anleuchten eines Objekts) und ist beispielsweise als Lichtmodul mit zumindest einer Lichtquelle realisiert. Die zumindest eine Lichtquelle kann als eine LED realisiert sein, die zur Emission von Licht im sichtbaren Bereich (VIS-Lichtquelle) oder von Infrarotlicht (IR-Lichtquelle) ausgebildet ist. Die Beleuchtungseinheit ist ebenfalls an die Steuerungs- und Auswerteeinrichtung des Kraftfahrzeugs anschließbar. Das von der Beleuchtungseinheit bzw. vom Lichtmodul emittierte Licht muss nicht zwangsläufig im sichtbaren Lichtspektrum liegen. Beispielsweise kann eine Infrarot-Kamera mit einer gezielten Infrarot-Beleuchtung kombiniert werden, um eine optimale Datenerfassung zu gewährleisten. Bei bestimmten Untervarianten ist die Beleuchtungseinheit auf dem Tragrahmen oder auf der Sensorhalterung statisch befestigt und in Bezug auf die Umfeldsensorikmittel entsprechend justiert.

Bei einer vorteilhaften Variante weist das Sensorikkombinationsmodul genau zwei optische Sensormittel, vorzugsweise in Form von zwei Kameras, sowie eine Beleuchtungseinheit zur Unterstützung der zwei optischen Sensormittel auf, wobei die zwei optischen Sensormittel und die Beleuchtungseinheit auf der Sensorhalterung in horizontaler Richtung nebeneinander statisch befestigt sind und die Beleuchtungseinheit zwischen den zwei optischen Sensormitteln positioniert ist. Beispielsweise kann diese Variante als ein Stereo-VIS-Kamera-System mit unterstützendem Lichtmodul realisiert werden. Eine andere Variante kann eine VIS-Kamera und eine IR-Kamera sowie eine Beleuchtungseinheit mit einer Lichtquelle für sichtbares Licht und einer IR-Lichtquelle umfassen.

Um die Sensorbaugruppe vor äußeren Einflüssen wie Verschmutzung, Chemikalien, Steinschlägen und dergleichen zu schützen, ist es von Vorteil wenn das Kraftfahrzeug-Sensorikkombinationsmodul ferner ein die Sensorikbaugruppe beherbergendes Sensorikgehäuse umfasst. Das Sensorikgehäuse besitzt nach an sich bekannter Art eine frontseitige Öffnung ist fix im Außenbereich des Kraftfahrzeugs, vorzugsweise in der Kraftfahrzeugvorderfront, eingebaut.

Das Sensorikgehäuse umfasst nach an sich bekannten Bauprinzipien eine das Sensorikgehäuse nach außen hin verschließbare Abdeckscheibe. Der Ausdruck "nach außen hin verschließbares Sensorikgehäuse" bedeutet in diesem Zusammenhang, dass die das Sensorikgehäuse und die Abdeckscheibe in einer Weise gestaltet und dimensionsiert sind, dass Fahrzeugumfelddaten von den im Sensorikgehäuse untergebrachten Umfeldsensorikmitteln durch die Abdeckscheibe hindurch erfasst werden können. Die Geometrie und die Oberfläche der Abdeckscheibe können so ausgeführt werden, dass möglichst wenig Schmutzpartikel im Fahrbetrieb anhaften; die Wahl bezüglich der Geometrie und der Oberflächenbeschaffenheit von Abdeckscheiben sind beispielsweise aus der Scheinwerfertechnik bekannt und können auf Abdeckscheiben von Sensorikgehäusen, die in den Außenbereich von Kraftfahrzeugen eingebaut werden, angewendet werden. In Abhängigkeit der Art der im Sensorikkombinationsmodul eingebauten Sensormittel bzw. der Beleuchtungseinheit ist ein Fachmann auf dem Gebiet in der Lage, eine geeignete Abdeckscheibe zu wählen; so ist die Abdeckscheibe beispielsweise im Fall einer VIS-Kamera oder einer VIS-Lichtquelle für sichtbares Licht durchlässig oder im Fall eines IR-Sensormittels wie LIDAR oder einer IR-Lichtquelle für IR-Licht durchlässig, oder im Fall von VIS/IR-Sensormitteln bzw. VIS/IR-Lichtquellen sowohl für sichtbares Licht als auch für IR-Licht durchlässig. Das Vorsehen einer einzigen Abdeckscheibe, welche die Sensormittel in Form einer gemeinsamen Außenfläche nach außen hin abschirmt, stellt für die vorliegende Erfindung eine besonders vorteilhafte Lösung dar, um den besonderen Anforderungen (wie z.B. Reinigung, Enttauung, Temperaturmanagement) in Bezug auf die Funktionalität von Sensoren, welche zum Einbau in einem Kraftfahrzeugaußenbereich vorgesehen sind, zu entsprechen. Durch die gemeinsame Außenfläche, die durch die Abdeckscheibe gebildet wird, kann die Verfügbarkeit der Datenerfassung durch die Sensormittel über einen längeren Zeitraum mit unterschiedlichen Einflussszenarien sichergestellt wird. Ferner kann die Abdeckscheibe mit einer bei Kraftfahrzeugscheinwerferabdeckscheiben standardmäßig aufgebrachten Antifog-Beschichtung versehen werden.

Bei einer vorteilhaften Weiterbildung kann eine Reinigungseinrichtung zur Reinigung der Abdeckscheibe in dem Sensorikgehäuse integriert sein. Beispielsweise kann die Reinigungseinrichtung eine Düse umfassen, mit welcher eine Reinigungsflüssigkeit auf die Abdeckscheibe aufgebracht wird, sowie einen Wischer zum Abziehen der Reinigungsflüssigkeit und der Verschmutzungen von der Abdeckscheibe. Der Vorteil ist, dass lediglich die Abdeckscheibe, welche die Sensorik nach außen hin abschirmt, als gemeinsame Außenfläche gereinigt werden muss.

Bei vorteilhaften Weiterbildungen kann das Kraftfahrzeug-Sensorikkombinationsmodul, welches ein die Sensorikbaugruppe beherbergendes Sensorikgehäuse umfasst, mittels einer stoß- und aufprallschützenden Halteeinrichtung am/im Außenbereich des Kraftfahrzeugs gehalten sein. Durch die stoß- und aufprallschützende Halteeinrichtung wird im Falle eines kleinen Unfalls, Stoßes oder Aufpralls die Aufprallenergie abgefangen und einer Beschädigung des Sensorikkombinationsmodul entgegengewirkt.

Bei bestimmten Varianten kann die stoß- und aufprallschützende Halteeinrichtung als zumindest eine an dem Sensorikgehäuse angebrachte stoß- und aufprallschützende Befestigungslasche ausgebildet sein.

Bei bestimmten Weiterbildungen kann die stoß- und aufprallschützende Halteeinrichtung bzw. die zumindest eine am Sensorikgehäuse angebrachte stoß- und aufprallschützende Befestigungslasche als energieabsorbierendes Deformationsbauteil ausgebildet sein oder ein solches aufweisen, oder die stoß- und aufprallschützende Halteeinrichtung bzw. die am Sensorikgehäuse angebrachte stoß- und aufprallschützende Befestigungslasche kann Sollbruchstellen und/oder Rastelemente aufweisen, welche unter Absorption von Stoß- bzw. Aufprallenergie aufbrechen bzw. entrasten. Beispielsweise würde im Fall eines im Kraftfahrzeugfrontbereich eingebauten Sensorikkombinationsmoduls bei einem Aufprall mit in Fahrzeuglängsrichtung eingebrachter Aufprallenergie das Sensorikkombinationsmodul nach Überschreiten einer bestimmten Krafteinwirkung entgegen der Fahrtrichtung des Kraftfahrzeugs um eine vorbestimmte Weglänge in den Bauraum hinein verschoben werden, ohne dabei Schaden zu nehmen. Für eine Reparatur müsste in diesem Fall nur die stoß- und aufprallschützende Halteeinrichtung bzw. die zumindest eine am Sensorikgehäuse angebrachte stoß- und aufprallschützende Befestigungslasche ausgetauscht werden.

Bei weiteren vorteilhaften Weiterbildungen der Erfindung kann es vorgesehen sein, dass eine Enttauungseinrichtung und/oder eine Heizungseinrichtung in dem Sensorikgehäuse integriert ist/sind. Das Vorsehen einer Enttauungseinrichtung, insbesondere zur Enttauung/Enteisung der Abdeckscheibe, und/oder einer Heizungseinrichtung, insbesondere für das Thermomanagement der Sensoren, stellt eine optimale Erfassung der Umfeldaten durch die Umfeldsensorikmittel sicher. Die Enttauung/Enteisung der Abdeckscheibe kann beispielsweise über einen Lüfter erfolgen, der eine Umluft erzeugt und die Wärme so an die Abdeckscheibe transportiert.

Ein weiterer Gegenstand der Erfindung ist ein Kraftfahrzeug, insbesondere ein vollständig oder teilweise autonom fahrendes Kraftfahrzeug, umfassend ein Kraftfahrzeug-Sensorikkombinationsmodul gemäß der Erfindung und wie hierin geoffenbart, wobei das Kraftfahrzeug-Sensorikkombinationsmodul vorzugsweise an/in einem Außenbereich des Kraftfahrzeugs, am meisten bevorzugt an/in der Kraftfahrzeugvorderfront, montiert ist. Der Ausdruck "an einem Außenbereich des Kraftfahrzeugs montiert" umfasst jegliche Möglichkeit der Befestigung des Sensorikombinationsmodul in oder am Außenbereich des Kraftfahrzeugs, beispielsweise eine Montage an der Außengeometrie oder ein Einbau des Moduls im Außenbereich ähnlich einem Kraftfahrzeugscheinwerfer. Vorzugsweise wird das Sensorikkombinationsmodul an einem Bereich der Kraftfahrzeugvorderfront montiert, am meisten bevorzugt in einen Bereich der Kraftfahrzeugvorderfront, z.B. mittig im Bereich des Kühlergrills, integriert.

Der Begriff "Kraftfahrzeug" (KFZ) wie hierin verwendet bezieht sich auf ein- oder mehrspurige motorisierte landgebundene Fahrzeuge wie Motorräder, PKWs, LKWs und dergleichen.

Die Begriffe "vollständig autonom betriebenes Kraftfahrzeug" bzw. "vollständig autonom" beziehen sich auf fahrerlose, selbstständig fahrende Kraftfahrzeuge.

Die Begriffe "teilweise autonom betriebenes Kraftfahrzeug" bzw. "teilweise autonom" beziehen sich auf Kraftfahrzeuge, die neben dem normalen Fahrbetrieb durch einen Fahrer auch über einen autonomen und den Fahrer entlastenden Selbstfahrmodus verfügen.

Die Erfindung samt weiterer Vorzüge wird im Folgenden anhand von nicht einschränkenden Beispielen und beiliegenden Zeichnungen näher beschrieben, wobei die Zeichnungen zeigen:
Fig. 1 zeigt eine perspektivische Ansicht eines erfindungsgemäßen Kraftfahrzeug-Sensorikombinationsmoduls mit Blick von rechts,
Fig. 2 zeigt eine perspektivische Ansicht des Kraftfahrzeug-Sensorikombinationsmoduls aus Fig. 1 mit Blick von links,
Fig. 3 zeigt eine Vorderansicht des Kraftfahrzeug-Sensorikombinationsmoduls aus Fig. 1,
Fig. 4 zeigt eine Detailansicht eines Sensormittels des Kraftfahrzeug-Sensorikombinationsmoduls aus Fig. 1,
Fig. 5 zeigt eine explodierte Darstellung des Kraftfahrzeug-Sensorikombinationsmoduls aus Fig. 1,
Fig. 6 zeigt eine perspektivische Vorderansicht des Kraftfahrzeug-Sensorikombinationsmoduls aus Fig. 1, ferner umfassend ein Sensorikgehäuse und stoß- und aufprallschützende Befestigungslaschen, und
Fig. 7 zeigt das Kraftfahrzeug-Sensorikkombinationsmodul aus Fig. 6 in perspektivischer Rückansicht.

Es versteht sich, dass die hier beschriebenen Ausführungsformen lediglich der Illustration dienen und nicht als für die Erfindung einschränkend aufzufassen sind; vielmehr fallen unter den Schutzbereich der Erfindung sämtliche Ausgestaltungen, die der Fachmann anhand der Beschreibung finden kann, wobei der Schutzbereich durch die Ansprüche festgelegt ist.

In den Figuren werden für gleiche oder vergleichbare Elemente zum Zwecke der einfacheren Erläuterung und Darstellung gleiche Bezugszeichen verwendet. Die in den Ansprüchen verwendeten Bezugszeichen sollen ferner lediglich die Lesbarkeit der Ansprüche und das Verständnis der Erfindung erleichtern und haben keinesfalls einen den Schutzumfang der Erfindung beeinträchtigenden Charakter.

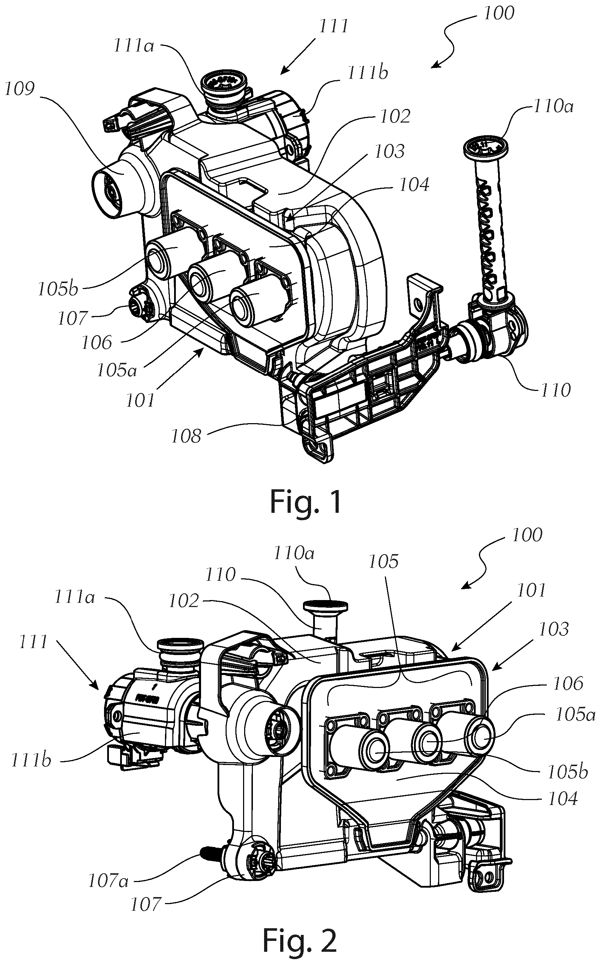

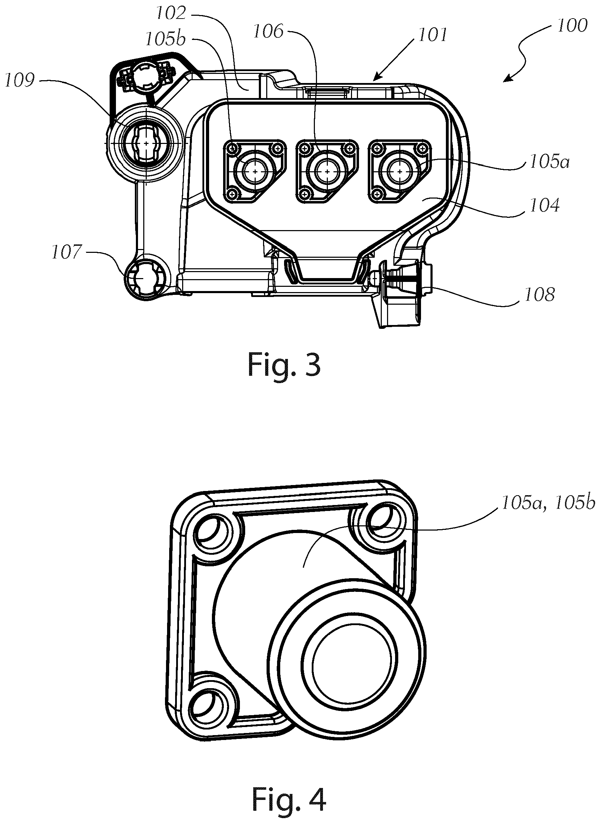

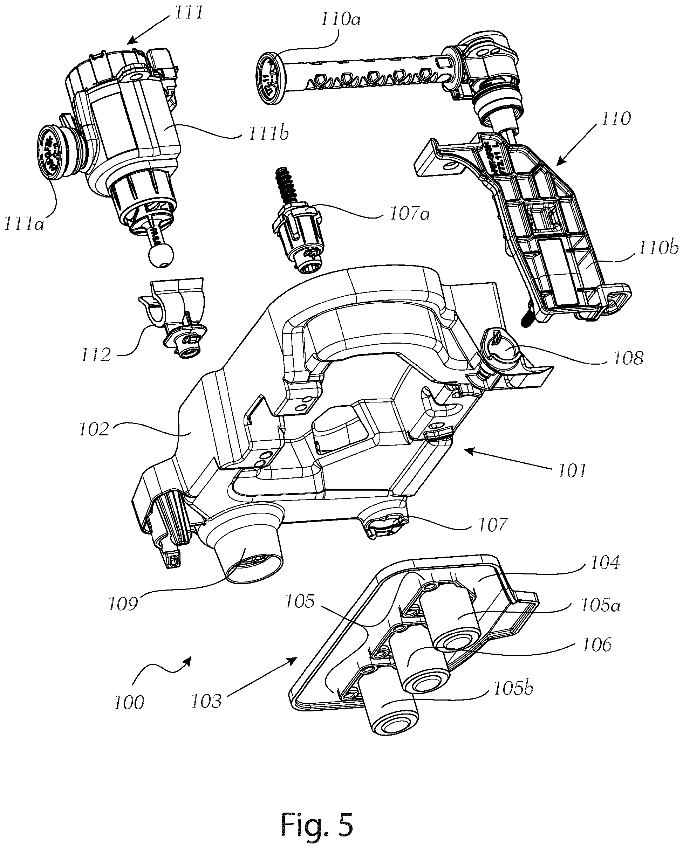

Fig. 1 zeigt eine perspektivische Ansicht eines erfindungsgemäßen Kraftfahrzeug-Sensorikombinationsmoduls **100** mit Blick von rechts, Fig. 2 zeigt eine perspektivische Ansicht des Kraftfahrzeug-Sensorikombinationsmoduls 100 mit Blick von links, Fig. 3 zeigt eine Vorderansicht des Kraftfahrzeug-Sensorikombinationsmoduls 100, Fig. 4 zeigt eine Detailansicht eines Sensormittels **105a, 105b** des Kraftfahrzeug-Sensorikombinationsmoduls 100, und Fig. 5 zeigt eine explodierte Darstellung des Kraftfahrzeug-Sensorikombinationsmoduls 100.

Bezug nehmend auf die Fig. 1, Fig. 2, Fig. 3 und Fig. 5, umfasst das Kraftfahrzeug-Sensorikkombinationsmodul 100 eine Sensorikbaugruppe **101.** Die Sensorikbaugruppe 101 umfasst einen Tragrahmen **102** und eine mit dem Tragrahmen 102 statisch verbundene und an eine (nicht näher dargestellte) Steuerungs- und Auswerteeinrichtung des Kraftfahrzeugs anschließbare Sensoreinheit **103.** Die Sensoreinheit 103 umfasst eine Sensorhalterung **104** und statisch auf der Sensorhalterung 104 befestigte Umfeldsensorikmittel **105** mit zwei Sensormitteln **105a, 105b** zum Erfassen von Fahrzeugumfelddaten.

Das Kraftfahrzeug-Sensorikkombinationsmodul 100 ist am Kraftfahrzeugaußenbereich in einem Bereich der Kraftfahrzeugvorderfront integrierbar und zur Erfassung von Umfelddaten von Szenen bzw. des Umfelds, die sich vor dem Kraftfahrzeug befinden, vorgesehen. Die Figuren 1-3 zeigen das Sensorikkombinationsmodul 100 daher in einer Orientierung, die jener im eingebauten Zustand im Kraftfahrzeug entspricht.

Bei den im Beispiel gezeigten Sensormitteln 105a, 105b handelt es sich um Kameras welche Bilder und/oder Videos der vor dem Kraftfahrzeug befindlichen Umgebung aufnehmen können.

Das Sensorikkombinationsmodul 100 weist ferner eine Beleuchtungseinheit **106** in Form eines Lichtmoduls mit einer Lichtquelle, z.B. einer LED oder eine LED-Anordnung auf. Die Beleuchtungseinheit dient zur Unterstützung der Sensormittel (z.B. Ausleuchten der Fahrzeugumgebung oder gezieltes Anleuchten eines Objekts). Die Lichtquelle kann als eine LED realisiert sein, die zur Emission von Licht im sichtbaren Bereich (VIS-Lichtquelle) oder von Infrarotlicht (IR-Lichtquelle) ausgebildet ist. Im gezeigten Beispiel umfasst die Beleuchtungseinheit eine VIS-Lichtquelle. Die Beleuchtungseinheit 106 ist ebenfalls an die Steuerungs- und Auswerteeinrichtung des Kraftfahrzeugs anschließbar. Im gezeigten Beispiel ist die Beleuchtungseinheit 106 auf der Sensorhalterung statisch befestigt und in Bezug auf die Umfeldsensorikmittel 105 entsprechend justiert.

Das Sensorikkombinationsmodul 100 gemäß diesem Beispiel umfasst somit zwei optische Sensormittel 105a, 105b in Form von zwei VIS-Kameras, sowie eine Beleuchtungseinheit 106 zur Unterstützung der zwei optischen Sensormittel 105a, 105b. Die zwei optischen Sensormittel 105a, 105b und die Beleuchtungseinheit 106 sind auf der Sensorhalterung 104 in horizontaler Richtung nebeneinander statisch befestigt und die Beleuchtungseinheit 106 ist zwischen den zwei optischen Sensormitteln 105a, 105b positioniert. Das in den Figuren gezeigte Beispiel zeigt also ein Stereo-VIS-Kamera-System mit unterstützendem Lichtmodul. Eine abgewandelte Variante des gezeigten Beispiels kann eine VIS-Kamera und eine IR-Kamera sowie eine Beleuchtungseinheit mit einer Lichtquelle für sichtbares Licht und einer IR-Lichtquelle umfassen.

Es versteht sich von selbst, dass anstelle der optischen Sensormittel 105a, 105b in Form von Kameras oder zusätzlich zu diesen Sensormitteln 105a, 105b auch andere Umfeldsensorikmittel, die dem Fachmann auf dem Gebiet der Umfeldsensorik bekannt sind, vorgesehen sein können. Als geeignete Sensormittel können z.B. weitere optische Sensormittel, Ultraschallsensormittel, Radarsensormittel, LiDAR-Sensormittel und Infrarotsensormittel genannt werden. Derartige Sensormittel sind dem einschlägigen Fachmann hinlänglich bekannt.

Die Umfeldsensorikmittel 105 umfassend die optischen Sensormittel 105a, 105b sowie die Beleuchtungseinrichtung 106 werden in dem in den Figuren 1 - 6 gezeigten Beispiel durch eine Dreipunktverstellung mittels Einstellschrauben statisch auf der Sensorhalterung 104 befestigt und auf eine Weise fix zueinander justiert, dass der Sichtbereich und die Reichweite der Sensorikmittel 105a, 105b und der unterstützenden Beleuchtungseinrichtung gewährleistet werden können. Siehe hierzu Fig. 4, welche eine vergrößerte Detailansicht eines der Sensormittel 105a, 105b zeigt.

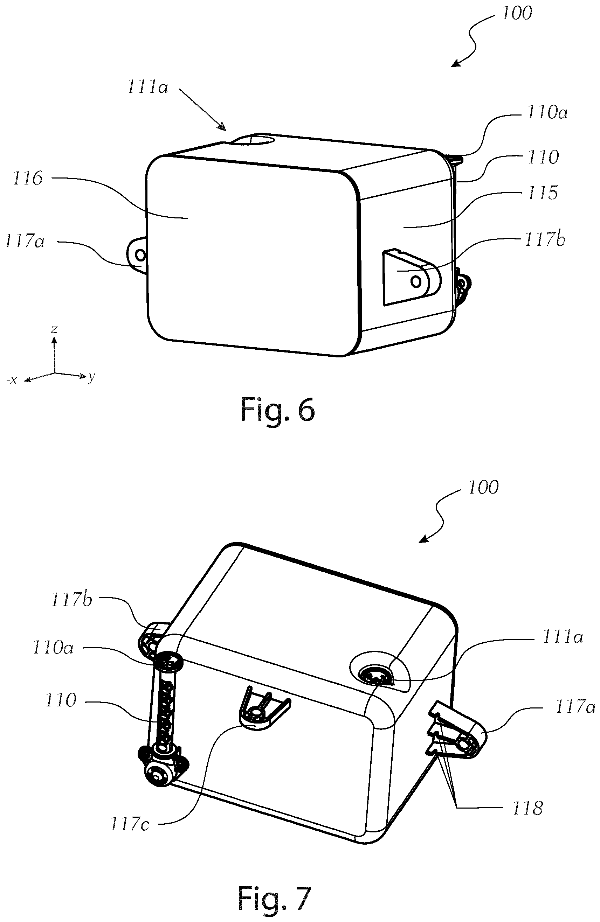

Das Sensorikkombinationsmodul 100 umfasst ferner Einstellmittel zur statischen und/oder dynamischen Einstellung der Sensorikbaugruppe 101. Für die statische und/oder dynamische Anpassung/Einstellung der Sensorikbaugruppe sind die Einstellmittel steuerbar ausgeführt und hierfür zweckmäßigerweise mit der Steuerungs- und Auswerteeinrichtung des Kraftfahrzeugs verbunden. Zum Zwecke der statischen und/oder dynamischen Einstellung weist die Sensorikbaugruppe 101 einen am Tragrahmen 102 angeordneten Fix-Lagerpunkt **107** auf. Die Sensorikbaugruppe 101 ist mittels eines Kegelritzels 107a innen am Sensorikgehäuse **115** (siehe Fig. 6 und Fig. 7 weiter unten) fixiert. Die Sensorikbaugruppe 101 samt der darauf statisch befestigten und fix zueinander justierten Sensormittel 105a, 105b und Beleuchtungseinrichtung 106 ist an diesem Fix-Lagerpunkt 107 um eine vertikale Achse z und um eine horizontale Achse y verschwenkbar, wobei die vertikale Achse z und die horizontale Achse y normal zueinander stehen. Die dritte Achse x bildet gemeinsam mit den beiden Achsen y und z ein rechtswendig orientiertes kartesisches Koordinatensystem, wobei die positive Zählrichtung entlang der dritten Achse x entgegen der üblichen Fahrtrichtung eines Fahrzeugs gerichtet ist, in dessen Frontbereich das Sensorikkombinationsmodul 100 eingebaut ist (siehe Fig. 6, in welcher der Verlauf der Achsen x, y und z in Bezug auf das Sensorikkombinationsmodul 100 dargestellt ist).

Die Achse z ist vertikal ausgerichtet, wodurch eine Schwenkbewegung um die Achse z eine Links-Rechts-Ausrichtung der Sensorikbaugruppe 101 ermöglicht. Die Achse y ist horizontal ausgerichtet und erstreckt sich zwischen dem Fix-Lagerpunkt 107 und einem zweiten Verstelllagerpunkt **108,** wobei eine Schwenkbewegung der Sensorikbaugruppe 101 um die horizontale Achse y eine Regulierung des Sichtbereichs der Sensormittel 105a, 105b sowie eine Regulierung der Leuchtweite der Beleuchtungseinrichtung 106 ermöglicht. In einem oberen Endbereich des Tragrahmens 102 ist ein Verbindungsstück **112** aufgenommen, wodurch ein erster Verstell-Lagerpunkt **109** gebildet wird. Dieser erste Verstell-Lagerpunkt 109 ist dazu eingerichtet die Schwenkbewegung um die horizontale Achse y zu veranlassen, indem dieser entlang einer Kreisbahn um den Fix-Lagerpunkt 107 auf und ab wandern kann.

Die Einstellmittel weisen erste und zweite Verstelleinrichtungen 110 und 111 auf, wobei die erste Verstelleinrichtung 110 an dem zweiten Verstelllagerpunkt 108 angreift und die zweite Verstelleinrichtung 111 auf den ersten Verstelllagerpunkt 109 wirkt. Beide Verstelleinrichtungen sind dabei über drehbare Justierelemente 110a bzw. 111a, inbesondere Justierschrauben, einstellbar.

Im Falle der ersten Verstelleinrichtung 110 greift ein Schubelement 110b der ersten Verstelleinrichtung 110 in den zweiten Verstelllagerpunkt 108 ein, wodurch ein Verschwenken der Sensorikbaugruppe 101 um die vertikale Achse z ermöglicht ist.

Die zweite Verstelleinrichtung 111 verfügt über einen Elektromotor 111b, der eine Linearbewegung des Verbindungsstücks 112 und somit ein Verschwenken der Sensorikbaugruppe um die horizontale Achse y ermöglicht. Mit Hilfe des Elektromotors 111b kann beispielsweise, eine dynamische Einstellung der Sensorikbaugruppe 101 mit den statisch darin befestigten Umfeldsensorikmitteln 105 sowie eine Leuchtweitenregulierung ebenfalls statisch in der Sensorikbaugruppe 101 befestigten Beleuchtungseinrichtung 106 realisiert werden. Hierfür ist der Elektromotor 111b über die Steuerungs- und Auswerteeinheit des Kraftfahrzeugs steuerbar.

Die mechanische Ausgestaltung der Verstelleinrichtungen 110 und 111 kann in beliebiger, dem Fachmann bekannter Weise von den dargestellten Varianten abweichen. Generell sind sämtliche gezeigte Bauteile und Varianten des in den Figuren 1-7 gezeigten Beispiels durch den Fachmann abwandelbar und nicht als einschränkend zu betrachten.

Fig. 6 zeigt eine perspektivische Ansicht des Kraftfahrzeug-Sensorikombinationsmoduls 100 aus Fig. 1 von vorne und Fig. 7 eine perspektivische Ansicht desselben von hinten, wobei das Kraftfahrzeug-Sensorikkombinationsmodul 100 ferner ein Sensorikgehäuse 115 mit einer das Sensorikgehäuse 115 nach außen hin verschließbaren transparenten Abdeckscheibe 116 umfasst. Wie aus Fig. 6 und Fig. 7 ersichtlich ist, schützen das Sensorikgehäuse 115 und die Abdeckscheibe 116 die Umfeldsensorikmittel 105 vor äußeren Einflüssen, erlauben jedoch Zugang zu den Verstelleinrichtungen 110 und 111 bzw. den Justierelementen 110a und 111a der Verstelleinrichtungen 110,111. Bezüglich des Vorteils einer einzigen Abdeckscheibe 116, welche die Umfeldsensorikmittel 105 in Form einer gemeinsamen Außenfläche nach außen hin abschirmt, wird auf die obigen Ausführungen verwiesen.

Seitlich außen am Sensorikgehäuse 115 sind stoß- und aufprallschützende Befestigungslaschen **117a, 117b** angebracht. Die jeweils links und rechts seitlich am Sensorikgehäuse 115 angebrachten Befestigungslaschen 117a, 117b weisen Sollbruchstellen 118 auf, welche unter Absorption von Stoß- bzw. Aufprallenergie, z.B. bei einem Unfall, aufbrechen. Wie aus Fig. 7 ersichtlich ist, ist eine weitere Befestigungslasche **117c** rückseitig am Sensorikgehäuse 115 angebracht; die Befestigungslasche 117c stabilisiert das Sensorikkombinationsmodul in Richtung Kraftfahrzeugmitte und dient zudem als Abstandshalter, wodurch im eingebauten Zustand ein freier Bauraum rückseitig des Sensorikkombinationsmoduls 100 geschaffen wird. Die Befestigungslasche 117c ist derart dünn ausgeführt, dass sie im Falle eines Aufpralls bei Überschreiten einer bestimmten Krafteinwirkung bricht. Die Befestigungslaschen 117a, 117b und 117c schützen das Sensorikkombinationsmodul 100 in erster Linie bei leichteren Unfällen (z.B. bei Wild- oder Einparkunfällen). Beispielsweise würde, im Fall eines im Kraftfahrzeugfrontbereich eingebauten Sensorikkombinationsmoduls 100 bei einem Aufprall mit in Fahrzeuglängsrichtung eingebrachter Aufprallenergie, das Sensorikkombinationsmodul 100 nach Überschreiten einer bestimmten Krafteinwirkung und Brechen der Laschen 117a, 117b, 117c entgegen der Fahrtrichtung des Kraftfahrzeugs um eine vorbestimmte Weglänge in den Bauraum hinein verschoben werden, ohne dabei Schaden zu nehmen. Für eine Reparatur müssten in diesem Fall nur die Befestigungslaschen 117a, 117b und 117c ausgetauscht werden.

Darüber hinaus können eine Reinigungseinrichtung zur Reinigung der Abdeckscheibe 116 sowie eine Enttauungseinrichtung bzw. eine Heizungseinrichtung zum Enttauen der Abdeckscheibe 116 bzw. für das Temperaturmanagement der Umfeldsensorikmittel 105 im Sensorikgehäuse 115 integriert sein.

Die Beschreibung der Erfindung anhand des in den Fig. 1-7 gezeigten Ausführungsbeispiels veranschaulicht den Vorteil der Erfindung, nämlich dass verschiedene Sensormittel zum Erfassen von Fahrzeugumfelddaten (hier optische Sensormittel 105a, 105b in Form von zwei Kameras) in einem zentralen Sensorikkombinationsmodul 100 kombiniert werden können und das Sensorikkombinationsmodul 100 als geschlossen montierte, in sich eingestellte Einheit im Außenbereich eine Kraftfahrzeugs justiert und fixiert werden kann. Es wird einem Fachmann angesichts der Beschreibung und des Ausführungsbeispiels klar sein, dass das Sensorikkombinationsmodul 100 besonders vorteilhaft in der Kraftfahrzeugfront integriert werden kann, und zwar in einer Art und Weise, dass sich dieses wenig bis gar nicht störend auf die Ästhetik des Kraftfahrzeugs auswirkt, um den hohen Designansprüchen von Käufern zu entsprechen.

Innerhalb der Sensorikbaugruppe 101 sind die einzelnen Sensorikmittel mittels Einstellmechaniken bereits statisch zueinander eingestellt und fix und unveränderlich zueinander justiert, so dass die Sensorikbaugruppe 101 des Sensorikkombinationsmoduls 100 als eine fix und fertig justierte Einheit betrachtet werden kann und nur mittels der Einstellmittel (Verstelleinrichtungen 110 und 111) eine statische und/oder dynamische Anpassung der Sensorikbaugruppe 101 erfolgt. Die Montage der einzelnen Komponenten der Sensorikbaugruppe 100 wird dabei so stabil ausgeführt, dass es zu keinen Fehlstellungen der Umfeldsensorikmittel 105 bzw. der Beleuchtungseinrichtung 106 während des Fahrbetriebs, günstigerweise über die gesamte Kraftfahrzeuglebensdauer, kommt. Anhand des beispielhaft erläuterten Sensorikkombinationsmoduls 100 wird auch klar, dass alle Sensormittel 105a, 105b sowie die Beleuchtungseinrichtung 106 das gleiche Bezugssystem haben, indem sie vertikal und horizontal fix zueinander justiert sind, weshalb eine gemeinsame Kalibrierung ermöglicht wird.

## Patentansprüche

1. Kraftfahrzeug-Sensorikkombinationsmodul (100), welches eine Sensorikbaugruppe (101) mit einem Tragrahmen (102) und eine mit dem Tragrahmen (102) statisch verbundene und an eine Steuerungs- und Auswerteeinrichtung des Kraftfahrzeugs anschließbare Sensoreinheit (103) umfasst, wobei die Sensoreinheit (103) eine Sensorhalterung (104) und statisch auf der Sensorhalterung (104) befestigte Umfeldsensorikmittel (105) mit zumindest einem Sensormittel (105a, 105b) zum Erfassen von Fahrzeugumfelddaten aufweist, wobei das Kraftfahrzeug-Sensorikkombinationsmodul (100) an/in einem Außenbereich des Kraftfahrzeugs, vorzugsweise an/in einem Bereich der Kraftfahrzeugvorderfront, montierbar ist, **dadurch gekennzeichnet, dass** das Kraftfahrzeug-Sensorikkombinationsmodul Einstellmittel (110, 111) zur statischen und/oder dynamischen Einstellung der Sensorikbaugruppe (101) aufweist, und die Umfeldsensorikmittel (105) zumindest zwei Sensormittel (105a, 105b) zum Erfassen von Fahrzeugumfelddaten umfassen, wobei die zumindest zwei Sensormittel (105a, 105b) auf der Sensorhalterung (104) statisch zueinander justiert sind.

2. Kraftfahrzeug-Sensorikkombinationsmodul nach Anspruch 1, **dadurch gekennzeichnet, dass** die Umfeldsensorikmittel (105) zumindest eines der folgenden Sensormittel zum Erfassen von Fahrzeugumfelddaten umfassen: optische Sensormittel, Ultraschallsensormittel, Radarsensormittel, Lidar-Sensormittel, Infrarotsensormittel.

3. Kraftfahrzeug-Sensorikkombinationsmodul nach Anspruch 2, **dadurch gekennzeichnet, dass** die optischen Sensormittel (105a, 105b) ein Kamerasystem mit zumindest einer Kamera umfassen.

4. Kraftfahrzeug-Sensorikkombinationsmodul nach einem der Ansprüche 1 bis 3, **dadurch gekennzeichnet, dass** es zumindest eine Beleuchtungseinheit (106) umfasst.

5. Kraftfahrzeug-Sensorikkombinationsmodul nach Anspruch 4, **dadurch gekennzeichnet, dass** die Beleuchtungseinheit (106) auf dem Tragrahmen (102) oder auf der Sensorhalterung (104) statisch befestigt ist.

6. Kraftfahrzeug-Sensorikkombinationsmodul nach Anspruch 4 oder 5, **dadurch gekennzeichnet, dass** es zwei optische Sensormittel (105a, 105b), vorzugsweise in Form von zwei Kameras, sowie eine Beleuchtungseinheit (106) zur Unterstützung der zwei optischen Sensormittel (105a, 105b) aufweist, wobei die zwei optischen Sensormittel (105a, 105b) und die Beleuchtungseinheit (106) auf der Sensorhalterung (104) in horizontaler Richtung nebeneinander statisch befestigt sind und die Beleuchtungseinheit (106) zwischen den zwei optischen Sensormitteln (105a, 105b) positioniert ist.

7. Kraftfahrzeug-Sensorikkombinationsmodul nach einem der Ansprüche 1 bis 6, **dadurch gekennzeichnet, dass** es ferner ein die Sensorikbaugruppe (101) beherbergendes Sensorikgehäuse (115) umfasst.

8. Kraftfahrzeug-Sensorikkombinationsmodul nach Anspruch 7, **dadurch gekennzeichnet, dass** es mittels einer stoß- und aufprallschützenden Halteeinrichtung (117a, 117b, 117c) am/im Außenbereich des Kraftfahrzeugs gehalten ist.

9. Kraftfahrzeug-Sensorikkombinationsmodul nach Anspruch 8, **dadurch gekennzeichnet, dass** die stoß- und aufprallschützende Halteeinrichtung (117a, 117b, 117c) als zumindest eine an dem Sensorikgehäuse angebrachte stoß- und aufprallschützende Befestigungslasche ausgebildet ist.

10. Kraftfahrzeug-Sensorikkombinationsmodul nach Anspruch 8 oder 9, **dadurch gekennzeichnet, dass** die stoß- und aufprallschützende Halteeinrichtung (117a, 117b, 117c) bzw. die zumindest eine am Sensorikgehäuse angebrachte stoß- und aufprallschützende Befestigungslasche (117a, 117b, 117b) als energieabsorbierendes Deformationsbauteil ausgebildet ist oder ein solches aufweist, oder dass die stoß- und aufprallschützende Halteeinrichtung bzw. die am Sensorikgehäuse angebrachte stoß- und aufprallschützende Befestigungslasche (117a, 117b) Sollbruchstellen (118) und/oder Rastelemente aufweist, welche unter Absorption von Stoß- bzw. Aufprallenergie aufbrechen bzw. entrasten.

11. Kraftfahrzeug-Sensorikkombinationsmodul nach einem der Ansprüche 7 bis 10, **dadurch gekennzeichnet, dass** das Sensorikgehäuse (115) eine das Sensorikgehäuse nach außen hin verschließbare Abdeckscheibe (116) umfasst.

12. Kraftfahrzeug-Sensorikkombinationsmodul nach Anspruch 11, **dadurch gekennzeichnet, dass** eine Reinigungseinrichtung zur Reinigung der Abdeckscheibe in dem Sensorikgehäuse integriert ist.

13. Kraftfahrzeug-Sensorikkombinationsmodul nach einem der Ansprüche 7 bis 12, **dadurch gekennzeichnet, dass** eine Enttauungseinrichtung und/oder eine Heizungseinrichtung in dem Sensorikgehäuse integriert ist.

14. Kraftfahrzeug, insbesondere vollständig oder teilweise autonom fahrendes Kraftfahrzeug, umfassend ein Kraftfahrzeug-Sensorikkombinationsmodul (100) nach einem der Ansprüche 1 bis 13, wobei das Kraftfahrzeug-Sensorikkombinationsmodul (100) vorzugsweise an/in einem Außenbereich des Kraftfahrzeugs, am meisten bevorzugt an/in der Kraftfahrzeugvorderfront, montiert ist.

## Claims

1. A motor vehicle sensor combination module (100) which comprises a sensor assembly (101) with a support frame (102) and a sensor unit (103) which is statically connected to the support frame (102) and can be connected to a control and evaluation device of the motor vehicle, the sensor unit (103) having a sensor mount (104) and environment sensor means (105) which are statically fastened to the sensor mount (104) and have at least one sensor means (105a, 105b) for recording vehicle environment data, wherein the motor vehicle sensor combination module (100) can be mounted on/in an exterior region of the motor vehicle, preferably on/in a region of the front of the motor vehicle, **characterized in that** the motor vehicle sensor combination module has adjustment means (110, 111) for static and/or dynamic adjustment of the sensor assembly (101), and the environment sensor means (105) comprise at least two sensor means (105a, 105b) for detecting vehicle environment data, the at least two sensor means (105a, 105b) being statically adjusted with respect to one another on the sensor mount (104).

2. The motor vehicle sensor combination module according to claim 1, **characterized in that** the environment sensor means (105) comprise at least one of the following sensor means for detecting vehicle environment data: optical sensor means, ultrasonic sensor means, radar sensor means, lidar sensor means, infrared sensor means.

3. The motor vehicle sensor combination module according to claim 2, **characterized in that** the optical sensor means (105a, 105b) comprise a camera system with at least one camera.

4. The motor vehicle sensor combination module according to any one of claims 1 to 3, **characterized in that** it comprises at least one illumination unit (106).

5. The motor vehicle sensor combination module according to claim 4, **characterized in that** the illumination unit (106) is statically fixed on the support frame (102) or on the sensor mount (104).

6. The motor vehicle sensor combination module according to claim 4 or 5, **characterized in that** it comprises two optical sensor means (105a, 105b), preferably in the form of two cameras, and an illumination unit (106) for supporting the two optical sensor means (105a, 105b), wherein the two optical sensor means (105a, 105b) and the illumination unit (106) are statically fastened to the sensor mount (104) side by side in the horizontal direction and the illumination unit (106) is positioned between the two optical sensor means (105a, 105b).

7. The motor vehicle sensor combination module according to any one of claims 1 to 6, **characterized in that** it further comprises a sensor housing (115) housing the sensor assembly (101).

8. The motor vehicle sensor combination module according to claim 7, **characterized in that** it is held on/in the exterior of the motor vehicle by means of a shock- and impact-protecting holding device (117a, 117b, 117c).

9. The motor vehicle sensor combination module according to claim 8, **characterized in that** the shock- and impact-protecting holding device (117a, 117b, 117c) is designed as at least one shock- and impact-protecting fastening tab attached to the sensor housing.

10. The motor vehicle sensor combination module according to claim 8 or 9, **characterized in that** the shock- and impact-protecting holding device (117a, 117b, 117c) or the at least one shock- and impact-protecting fastening tab (117a, 117b, 117b) attached to the sensor housing is designed as or has an energy-absorbing deformation component, or **in that** the shock- and impact-protecting holding device or the shock- and impact-protecting fastening tab (117a, 117b) attached to the sensor housing has predetermined breaking points (118) and/or latching elements which break open or unlatch while absorbing shock or impact energy.

11. The motor vehicle sensor combination module according to any one of claims 7 to 10, **characterized in that** the sensor housing (115) comprises a cover plate (116) which can close the sensor housing to the outside.

12. The motor vehicle sensor combination module according to claim 11, **characterized in that** a cleaning device for cleaning the cover plate is integrated in the sensor housing.

13. The motor vehicle sensor combination module according to any one of claims 7 to 12, **characterized in that** a defrosting device and/or a heating device is integrated in the sensor housing.

14. A motor vehicle, in particular a fully or partially autonomously driving motor vehicle, comprising a motor vehicle sensor combination module (100) according to any one of claims 1 to 13, wherein the motor vehicle sensor combination module (100) is preferably mounted on/in an exterior region of the motor vehicle, most preferably on/in the front of the motor vehicle.

## Revendications

1. Module combiné de capteurs pour véhicule automobile (100), qui comporte un assemblage de détection (101) ayant un cadre de support (102) et une unité de détection (103) reliée statiquement au cadre de support (102) et apte à être raccordée à un dispositif de commande et d'évaluation du véhicule automobile, ladite unité de détection (103) présentant un support de capteurs (104) et des moyens de détection environnementale (105) fixés statiquement sur le support de capteurs (104) et ayant au moins un moyen de capteurs (105a, 105b) pour saisir des données d'environnement du véhicule, le module combiné de capteurs pour véhicule automobile (100) étant apte à être monté sur/dans une zone extérieure du véhicule automobile, de préférence sur/dans une zone de l'avant du véhicule automobile, **caractérisé en ce que** le module combiné de capteurs pour véhicule automobile comprend des moyens de réglage (110, 111) pour le réglage statique et/ou dynamique de l'assemblage de détection (101), et les moyens de détection environnementale (105) comprennent au moins deux moyens de détection (105a, 105b) pour la saisie de données d'environnement du véhicule, lesdits au moins deux moyens de détection (105a, 105b) étant ajustés statiquement l'un par rapport à l'autre sur le support de capteurs (104).

2. Module combiné de capteurs pour véhicule automobile selon la revendication 1, **caractérisé en ce que** les moyens de détection environnementale (105) comprennent au moins l'un des moyens de détection suivants pour détecter des données d'environnement du véhicule : moyens de détection optiques, moyens de détection ultrasoniques, moyens de détection radar, moyens de détection lidar, moyens de détection infrarouge.

3. Module combiné de capteurs pour véhicule automobile selon la revendication 2, **caractérisé en ce que** les moyens de détection optiques (105a, 105b) comportent un système de caméra incluant au moins une caméra.

4. Module combiné de capteurs pour véhicule automobile selon l'une quelconque des revendications 1 à 3, **caractérisé en ce qu'**il comporte au moins une unité d'éclairage (106).

5. Module combiné de capteurs pour véhicule automobile selon la revendication 4, **caractérisé en ce que** l'unité d'éclairage (106) est fixée statiquement sur le cadre support (102) ou sur le support de capteurs (104).

6. Module combiné de capteurs pour véhicule automobile selon la revendication 4 ou 5, **caractérisé en ce qu'**il comprend deux moyens de détection optique (105a, 105b), de préférence sous la forme de deux caméras, ainsi qu'une unité d'éclairage (106) pour assister les deux moyens de détection optique (105a, 105b), les deux moyens de détection optiques (105a, 105b) et l'unité d'éclairage (106) étant fixés statiquement sur le support de capteur (104), côte à côte dans le sens horizontal, et l'unité d'éclairage (106) étant positionnée entre les deux moyens de détection optiques (105a, 105b).

7. Module combiné de capteurs pour véhicule automobile selon l'une quelconque des revendications 1 à 6, **caractérisé en ce qu'**il comporte en outre un boîtier de capteurs (115) abritant l'assemblage de détection (101).

8. Module combiné de capteurs pour véhicule automobile selon la revendication 7, **caractérisé en ce qu'**il est maintenu sur/dans la partie extérieure du véhicule automobile au moyen d'un dispositif de retenue (117a, 117b, 117c) protégeant contre les chocs et les impacts.

9. Module combiné de capteurs pour véhicule automobile selon la revendication 8, **caractérisé en ce que** le dispositif de retenue (117a, 117b, 117c) protégeant contre les chocs et les impacts est réalisé en forme d'au moins une patte de fixation protégeant contre les chocs et les impacts, montée sur le boîtier de capteurs.

10. Module combiné de capteurs pour véhicule automobile selon la revendication 8 ou 9, **caractérisé en ce que** ledit dispositif de retenue (117a, 117b, 117c) protégeant contre les chocs et les impacts ou ladite au moins une patte de fixation (117a, 117b, 117b) protégeant contre les chocs et les impacts et montée sur le boîtier de capteurs est conçu comme un composant de déformation absorbant l'énergie ou présente un tel composant, ou **en ce que** ledit dispositif de retenue protégeant contre les chocs et les impacts ou ladite au moins une patte de fixation (117a, 117b, 117b) protégeant contre les chocs et les impacts et montée sur le boîtier du capteur comporte des points de rupture (118) et/ou des éléments d'encliquetage qui se rompent ou décrochent en absorbant de l'énergie de choc ou d'impact.

11. Module combiné de capteurs pour véhicule automobile selon l'une quelconque des revendications 7 à 10, **caractérisé en ce que** le boîtier de capteurs (115) comprend une vitre de recouvrement (116) apte à fermer le boîtier de capteurs vers l'extérieur.

12. Module combiné de capteurs pour véhicule automobile selon la revendication 11, **caractérisé en ce qu'**un dispositif de nettoyage pour nettoyer la vitre de recouvrement est intégré dans le boîtier de capteurs.

13. Module combiné de capteurs pour véhicule automobile selon l'une quelconque des revendications 7 à 12, **caractérisé en ce qu'**un dispositif de dégivrage et/ou un dispositif de chauffage est intégré dans le boîtier de capteurs.

14. Véhicule automobile, notamment véhicule automobile à conduite totalement ou partiellement autonome, comportant un module combiné de capteurs pour véhicule automobile (100) selon l'une quelconque des revendications 1 à 13, le module combiné de capteurs pour véhicule automobile (100) étant de préférence monté sur/dans une zone extérieure du véhicule automobile, de préférence sur/dans l'avant du véhicule automobile.
